# EUROPEAN PATENT SPECIFICATION

(11) **EP 4 071 533 B1**
(45) Date of publication and mention of the grant of the patent: **14.08.2024**
(21) Application number: 22164350.5
(22) Date of filing: 25.03.2022
(51) Int. Cl.: G02B 7/00, G02B 7/02, G02B 13/00

(54) **METHOD OF ASSEMBLING AN OPTICAL DEVICE AND OPTICAL DEVICE ASSEMBLED ACCORDING TO THE SAME**
VERFAHREN ZUM ZUSAMMENBAU EINER OPTISCHEN VORRICHTUNG UND NACH DIESEM VERFAHREN ZUSAMMENGEBAUTE OPTISCHE VORRICHTUNG
PROCÉDÉ D'ASSEMBLAGE D'UN DISPOSITIF OPTIQUE ET DISPOSITIF OPTIQUE ASSEMBLÉ SELON CELUI-CI

(30) Priority: 09.04.2021 GB 202105071
(43) Date of publication of application: 12.10.2022
(73) Proprietor: Aptiv Technologies AG, 8200 Schaffhausen (CH)
(72) Inventor: Przemyslaw, Antos, Dublin (IE); Duralek, Janus, Dublin (IE); Soehngen, Udo, Dublin (IE)
(74) Representative: Gaunt, Thomas Derrick

(56) References cited:
- EP-A1- 1 289 281
- CN-A- 108 351 485
- DE-A1- 102009 027 514
- JP-A- 2006 078 517
- US-A1- 2015 062 422
- US-A1- 2018 152 607
- US-A1- 2019 124 238
- US-A1- 2020 145 565

## Description

### Introduction

The present disclosure relates to a method of assembling an optical device. The present disclosure also concerns an optical device assembled using the method. The disclosure is particularly relevant to a method of assembling an automotive camera, and the manufacture of camera assemblies for automotive applications.

### Background

Cameras and other optical devices are important sensors in automotive applications, particularly with the increasing prevalence of autonomous driving and safety assistance systems. As these systems become more advanced, they have driven the use of higher resolution cameras. However, as a digital camera's resolution increases, it becomes more sensitive to optical misalignment caused by, for example, strain and deformations within the assembly.

In this respect, during assembly of a camera, an imager soldered to a printed circuit board (PCB) will be mechanically secured via the PCB to a lens holder using screws. A lens will then be actively aligned to the imager assembly to align its focal plane with the sensitivity plane of the imager's sensor to provide for the output of a focussed image. Once in its aligned position, the lens is then secured by curing an adhesive at the mounting interface between the lens and the lens holder. As such, this active alignment step of the lens can be used to correct for minor positional variances arising from component manufacturing tolerances. However, as the resolution of imagers increases, even micron level deformations can compromise image clarity. This is a particular problem as the camera assembly is heated and cooled during normal use because residual strains within components may cause flexing in the PCB. Whilst small, these movements arising from thermal cycling may cause parts of the imager to move slightly out of focus by 1 or 2 microns. As such, image focussed is reduced, thereby minimising some of the benefits of using a higher resolution imager. As such, there is a need for further ways to improve the maintaining of focus of an optical system within a camera assembly. Prior art can be found in US 2018/152607 A1 disclosing a method of assembling a camera suitable for vehicular use includes providing a lens accommodated in a lens barrel, a lens holder, and a printed circuit board with an imager disposed thereat. An adhesive is dispensed to establish a layer of uncured adhesive (i) between the lens barrel and lens holder or (ii) between the printed circuit board and the lens holder. With the lens in focus with the imager and optically center-aligned therewith, the adhesive is initially cured to an initially-cured state in an initial radiation curing process that includes exposure to UV light for a first period of time. The initially-cured adhesive is further cured to a further-cured state in a secondary curing process. The further-cured state is achieved within a second period of time that is longer than the first period of time. Further prior art can be found in JP 2006 078517 A disclosing an imaging module comprising an optical glass and a sensor chip that are electrically connected to a board. A lens is provided on lower surface of the optical glass that is supported by a holding unit.

### Summary

According to a first aspect, there is provided a method of assembling an optical device, including: providing a circuit board supporting an imager and a support for supporting the circuit board; applying a first adhesive layer to a mating region of at least one of the circuit board and the support; and fastening the circuit board to the support using at least one fastener, wherein the first adhesive layer is compressed between the mating regions once the circuit board is fastened; curing the first adhesive layer for forming a stabilised imager assembly; fixing a lens to the stabilised imager assembly using a second adhesive layer, wherein the step of fixing the lens includes positioning the lens on the support to align its focal plane with the imager and curing the second adhesive layer.

In this way, the imager assembly may be fully stabilised by the cured first adhesive layer before the step of actively aligning the lens. That is, in addition to the standard mechanical fasteners between the imager PCB and the support, an adhesive layer is used to reinforce the fixing by binding together the mating faces of these components. As this adhesive layer reaches its full bonding strength, it thereby stabilises the position of imager relative to the support. Consequently, when the lens is subsequently fitted to the stabilised assembly, the alignment between the lens and the imager may be maintained. For example, even if strains manifest around screw fasteners due to thermal cycling, the adhesive bonding between the PCB and the support would prevent these strains from deforming the PCB. This thereby allows positional accuracy to be maintained.

In embodiments, at least one of the steps of curing the first and second adhesive layers includes heating the adhesive. In this way, a heat cured adhesive may be used to ensure complete curing and maximum bond strength between fixed components.

In embodiments, the step of curing the first adhesive layer includes curing until full strength. In this way, the maximum bond strength is achieved between the circuit board and the support to stabilise the assembly before the subsequent alignment step.

In embodiments the step of curing the first adhesive layer includes heating to a temperature equal to or greater than a maximum operating temperature for the optical device. In this way, the curing temperature is selected to be above the operating conditions of the device. This may thereby ensure the positional relationship between components is not reduced during normal use.

In embodiments the step of curing the first adhesive layer includes heating for a duration until full cure of the adhesive.

In embodiments, the cured first adhesive layer stabilises the interface between the mating regions in the stabilised imager assembly. In this way, the opposing faces of the circuit board and the support that engage with one another when the circuit board is secured to the support are bonded together by the adhesive.

In embodiments, the step of fixing the lens to the stabilised imager assembly includes optical system alignment for compensating for manufacturing tolerances. In this way, the lens may be optically aligned to the imager for compensating for any positional variances arising from the components, whilst the cured first adhesive layer in the stabilised imager assembly ensures positional accuracy of the imager is subsequently maintained.

In embodiments, the step of fastening the circuit board to the support using at least one fastener includes fastening using a screw fastener.

In embodiments, the step of fixing the lens to the stabilised imager assembly includes aligning the lens based on a cured position of the imager in the stabilised imager assembly.

In embodiments, the first adhesive layer surrounds the imager. In this way, the first adhesive layer provides a fixing to the support which encircles the imager. In embodiments, the first adhesive layer is radially closer to the imager than the fastener. In this way, the distance over which the circuit board may flex is reduced.

According to a second aspect, there is provided an optical device including: a stabilised imager assembly including a circuit board supporting an imager, a support for supporting the circuit board, and at least one fastener fastening the circuit board to the support, wherein the fastening is stabilised by a first adhesive layer of cured adhesive compressed between mating regions of the circuit board and the support; and a lens fixed to the support by a second adhesive layer of cured adhesive in a position so that its focal plane is aligned with the imager in the position stabilised by the first adhesive layer.

In this way, an improved optical device, such as a camera, may be provided in which the lens has been aligned to the position of the imager in a pre-stabilised assembly. That is, the imager's position relative to the support is fixed by the cured adhesive prior to alignment of the lens. This thereby allows focus to be maintained in the resultant assembly.

In embodiments, the adhesive is heat cured.

In embodiments, the first adhesive layer is cured to full strength, and the focal plane is aligned with the imager in the position stabilised by the full strength cured first adhesive layer.

In embodiments, the first adhesive layer is cured to full cure, and the focal plane is aligned with the imager in the position stabilised by the full cured first adhesive layer.

In embodiments, the cured first adhesive layer stabilises the interface between the mating regions in the stabilised imager assembly.

In embodiments, the lens is fixed to the support for compensating for manufacturing tolerances in optical system alignment.

In embodiments, the at least one fastener includes a screw fastener.

### Brief Description of Drawings

An illustrative embodiment will now be described with reference to the accompanying drawings in which:
Figure 1 shows a cross-sectioned isomeric view of a camera according to the illustrative embodiment; and
Figure 2 cross sectional view of part of the camera shown in Figure 1.

### Detailed Description

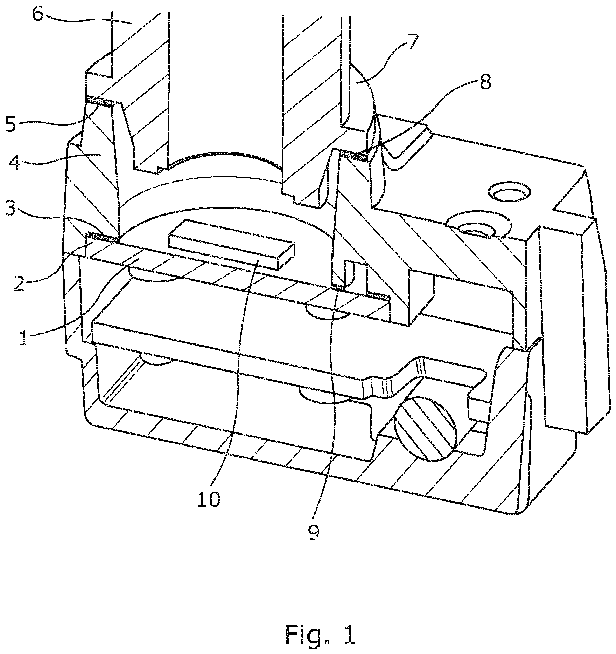

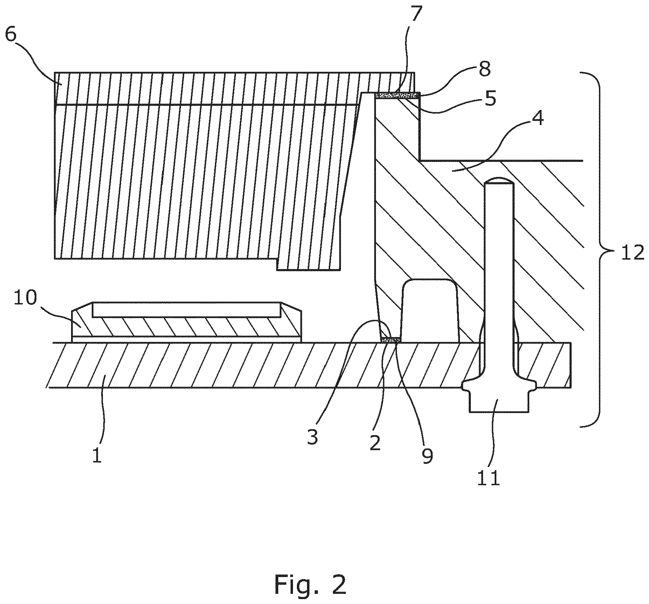

Figures 1 and 2 show a camera according to an illustrative embodiment. The camera includes an imager assembly including an imager 10 soldered to a printed circuit board (PCB) 1. The PCB 1 is secured to a lens holder 4, which forms a support for the lens 6 and provides part of the housing for the camera assembly. In this embodiment, the lens holder 4 is formed as a metal frame for supporting other components.

The PCB 1 is seated into a recess provided in the base of the lens holder 4. Once seated, an imager mating region 2 on the PCB 1 mates with an opposing holder mating region 3 of the lens holder 4. As shown in Figure 2, a screw 11 is used to secure the PCB 1 in its seated position on the lens holder 4. In this embodiment, two screws 11 are used on opposing sides of the PCB 1, although only one screw is visible in Figure 2. In other arrangements, more than two screws may be used. A first layer of heat curable adhesive 9 is also provided between the mating regions 2 and 3 to stabilise the screw fixing.

The lens 6 is provided with a radial collar 7 which is used to secure to the lens 6 to a lens seat 5 provided at the front of the lens holder 4. The collar 7 fixed in place by a second adhesive layer 8. The lens seat 5 and the collar 7 provide mating regions between the lens 6 and lens holder 4 for aligning the lens 6 to the imager 10.

During assembly, a bead of adhesive is applied to the imager mating region 3 of the lens holder 4 to form the first adhesive layer 9. The PCB 1 containing the imager 10 is then fitted to the lens holder 4 and fixed in place by the screw 11. The screw 11 passes through a screw aperture in the PCB 1 and the screw's head presses the PCB 1 against the housing 4. This acts to compress the first adhesive layer 9 between the holder mating region 3 and the opposing imager mating region 2 on the surface of the PCB 1. Once the PCB 1 is mechanically fixed by the screws, the first adhesive layer 9 is heat cured until it achieves full cure and attains its full bonding properties. This thereby acts to stabilise the PCB 1 relative to the lens holder 4, and hence also stabilises the imager 10 soldered to the PCB 1.

Once the first adhesive layer 9 has fully bonded, a stabilised imager assembly 12 is formed which includes the PCB 1, the imager 10 and the lens holder 4. The lens 6 may be fixed to the lens holder 4 in an active alignment step to align the optical system. For this, a bead of adhesive is applied between the seat 5 and the collar 7 to form the second adhesive layer 8, and the position of the lens is adjusted until the focal plane of the lens 6 is optimally aligned for focussing an image onto the imager 10. The second adhesive layer 8 is then UV cured to fix the lens 6 in the aligned position relative to the lens holder 4. Thermal curing may then be used to fully cure the second adhesive layer 8 and achieve maximum bonding strength.

Importantly, because the active alignment step occurs after the imager assembly has been stabilised by the cured first adhesive layer 9, the positional stability of the imager 10 may be maintained. As such, the resultant camera assembly is less prone to defocussing arising from positional changes between the imager 10 relative to the lens 10 because the position of the PCB 1 is stabilised by its more secure fixing to the lens housing 4. This, in turn, stabilises the final optical system when subjected to thermal cycling during normal camera use.

It will be understood that the embodiment illustrated above shows an application only for the purposes of illustration. In practice, embodiments may be applied to many different configurations, the detailed embodiments being straightforward for those skilled in the art to implement.

In this connection, for example, whilst the above illustrative embodiment utilises heat curing for the first adhesive layer 9, it will be understood that other curing methods, such as UV curing, may be used. Furthermore, it will be understood that the first and second adhesive layers may be the same type of adhesive, or in other embodiments different adhesives may be used.

## Claims

1. A method of assembling an optical device, comprising:
providing a circuit board (1) supporting an imager (10) and a support (4) for supporting the circuit board (1);
applying a first adhesive layer (9) to a mating region (2,3) of at least one of the circuit board (1) and the support (4); and
fastening the circuit board (1) to the support (4) using at least one fastener (11), wherein the first adhesive layer (9) is compressed between the mating regions (2,3) once the circuit board (1) is fastened;
curing the first adhesive layer (9) for forming a stabilised imager assembly (12);
fixing a lens (6) to the stabilised imager assembly (12) using a second adhesive layer (8), wherein the step of fixing the lens (6) comprises positioning the lens on the support (4) to align its focal plane with the imager (10) and curing the second adhesive layer (8).

2. A method according to claim 1, wherein at least one of the steps of curing the first and second adhesive layers (9,8) comprises heating the adhesive.

3. A method according to claim 1 or 2, wherein the step of curing the first adhesive layer (9) comprises curing until full strength.

4. A method according to any preceding claim, wherein the step of curing the first adhesive layer (9) comprises heating to a temperature equal to or greater than a maximum operating temperature for the optical device.

5. A method according to any preceding claim, wherein the step of curing the first adhesive layer (9) comprises heating for a duration until full cure of the adhesive.

6. A method according to any preceding claim, wherein the cured first adhesive layer (9) stabilises the interface between the mating regions (2,3) in the stabilised imager assembly (12).

7. A method according to any preceding claim, wherein the step of fixing the lens (6) to the stabilised imager assembly (12) comprises optical system alignment for compensating for manufacturing tolerances.

8. A method according to any preceding claim, wherein the step of fastening the circuit board (1) to the support (4) using at least one fastener (11) comprises fastening using a screw fastener.

9. A method according to any preceding claim, wherein the step of fixing the lens (6) to the stabilised imager assembly (12) comprises aligning the lens (6) based on a cured position of the imager (10) in the stabilised imager assembly (12).

10. An optical device, comprising:
a stabilised imager assembly (12) comprising a circuit board (1) supporting an imager (10), a support (4) for supporting the circuit board (1), and at least one fastener (11) fastening the circuit board (1) to the support (4), wherein the fastening is stabilised by a first adhesive layer (9) of cured adhesive compressed between mating regions (2,3) of the circuit board (1) and the support (4); and
a lens (6) fixed to the support (4) by a second adhesive layer (8) of cured adhesive in a position so that its focal plane is aligned with the imager (10) in the position stabilised by the first adhesive layer (9).

11. An optical device according to claim 10, wherein the adhesive is heat cured.

12. An optical device according to claim 10, wherein the first adhesive layer (9) is cured to full strength, and the focal plane is aligned with the imager (10) in the position stabilised by the full strength cured first adhesive layer (9) .

13. An optical device according to any one of claims 10-12, wherein the first adhesive layer (9) is cured to full cure, and the focal plane is aligned with the imager (10) in the position stabilised by the full cured first adhesive layer (9) .

14. An optical device according to any one of claims 10-13, wherein the cured first adhesive layer (9) stabilises the interface between the mating regions (2,3) in the stabilised imager assembly (12).

15. An optical device according to any one of claims 10-14, wherein the lens (6) is fixed to the support (4) for compensating for manufacturing tolerances in optical system alignment.

16. An optical device according to any one of claims 10-15, wherein the at least one fastener (11) comprises a screw fastener.

## Patentansprüche

1. Ein Verfahren zur Anordnung eines optischen Geräts, umfassend:
Bereitstellen einer Leiterplatte (1), die einen Bildwandler (10) hält und eine Halterung (4), die die Leiterplatte (1) hält;
Auftragen einer ersten Klebeschicht (9) in einem Verbindungsbereich (2, 3) mindestens entweder an der Leiterplatte (1) oder der Halterung (4); und
Befestigen der Leiterplatte (1) an der Halterung (4) unter Verwendung mindestens eines Befestigungselements (11), wobei die erste Klebschicht (9) zwischen den Verbindungsbereichen (2, 3) komprimiert wird, sobald die Leiterplatte (1) befestigt wird;
Härten der ersten Klebeschicht (9), um eine stabilisierte Bildwandler-Anordnung (12) zu bilden;
Befestigen einer Linse (6) an der stabilisierten Bildwandler-Anordnung (12) mit einer zweiten Klebeschicht (8), wobei der Schritt des Befestigens der Linse (6) das Positionieren der Linse an der Halterung (4) umfasst, um ihre Brennebene an dem Bildwandler (10) auszurichten, und Härten der zweiten Klebeschicht (8).

2. Verfahren nach Anspruch 1, wobei mindestens einer der Schritte zum Härten der ersten und zweiten Klebeschicht (9, 8) das Erwärmen des Klebstoffs umfasst.

3. Verfahren nach Anspruch 1 oder 2, wobei der Schritt des Härtens der ersten Klebeschicht (9) das Härten bis zur vollen Stärke umfasst.

4. Verfahren nach einem der vorhergehenden Ansprüche, wobei der Schritt des Härtens der ersten Klebeschicht (9) das Erwärmen auf eine Temperatur umfasst, die gleich oder höher ist als eine maximale Betriebstemperatur für das optische Gerät.

5. Verfahren nach einem der vorhergehenden Ansprüche, wobei der Schritt des Härtens der ersten Klebeschicht (9) das Erwärmen für eine Dauer bis zur vollständigen Härtung des Klebstoffs umfasst.

6. Verfahren nach einem der vorhergehenden Ansprüche, wobei die gehärtete erste Klebeschicht (9) die Schnittstelle zwischen den Verbindungsbereichen (2, 3) in der stabilisierten Bildwandler-Anordnung (12) stabilisiert.

7. Verfahren nach einem der vorhergehenden Ansprüche, wobei der Schritt der Befestigung der Linse (6) an der stabilisierten Bildwandler-Anordnung (12) eine optische Systemausrichtung für die Kompensation von Produktionstoleranzen umfasst.

8. Verfahren nach einem der vorhergehenden Ansprüche, wobei der Schritt der Befestigung der Leiterplatte (1) an der Halterung (4) mit mindestens einem Befestigungsmittel (11) das Befestigen mit einer Schraubbefestigung umfasst.

9. Verfahren nach einem der vorhergehenden Ansprüche, wobei der Schritt des Befestigens der Linse (6) an der stabilisierten Bildwandler-Anordnung (12) das Ausrichten der Linse (6) basierend auf einer gehärteten Position des Bildwandlers (10) in der stabilisierten Bildwandler-Anordnung (12) umfasst.

10. Eine optisches Gerät, umfassend:
Eine stabilisierte Bildwandler-Anordnung (12) umfassend eine Leiterplatte (1), die einen Bildwandler (10) hält, eine Halterung (4) zum Halten der Leiterplatte (1), und mindestens ein Befestigungselement (11), das die Leiterplatte (1) an der Halterung (4) befestigt, wobei die Befestigung durch eine erste Klebeschicht (9) eines gehärteten Klebstoffs, der zwischen den Verbindungsbereichen (2, 3) der Leiterplatte (1) und der Halterung (4) komprimiert ist, stabilisiert wird; und
eine Linse (6), die an der Halterung (4) durch eine zweite Klebeschicht (8) eines gehärteten Klebstoffs in einer Position gehalten wird, so dass ihre Brennebene an dem Bildwandler (10) in der durch die erste Klebeschicht (9) stabilisierten Position ausgerichtet wird.

11. Optisches Gerät nach Anspruch 10, wobei der Klebstoff wärmegehärtet ist.

12. Optisches Gerät nach Anspruch 10, wobei die erste Klebeschicht (9) in voller Stärke gehärtet ist, und die Brennebene an dem Bildwandler (10) in der Position ausgerichtet ist, die durch die erste in voller Stärke ausgehärtete Klebeschicht (9) stabilisiert wurde.

13. Optisches Gerät nach einem der Ansprüche 10-12, wobei die erste Klebeschicht (9) in voller Stärke gehärtet ist, und die Brennebene an dem Bildwandler (10) in der Position ausgerichtet ist, die durch die erste voll ausgehärtete Klebeschicht (9) stabilisiert wurde.

14. Optisches Gerät nach einem der vorhergehenden Ansprüche 10-13, wobei die gehärtete erste Klebeschicht (9) die Schnittstelle zwischen den Verbindungsbereichen (2,3) in der stabilisierten Bildwandler-Anordnung (12) stabilisiert.

15. Optisches Gerät nach einem der Ansprüche 10-14, wobei die Linse (6) an der Halterung (4) befestigt ist, um die Produktionstoleranzen in einer optischen Systemausrichtung zu kompensieren.

16. Optisches Gerät nach einem der Ansprüche 10-15, wobei das mindestens eine Befestigungselement (11) eine Schraubbefestigung umfasst.

## Revendications

1. Procédé d'assemblage d'un dispositif optique, comprenant :
la fourniture d'une carte de circuits imprimés (1) supportant un imageur (10) et un support (4) destinés à supporter la carte de circuits imprimés (1) ;
l'application d'une première couche adhésive (9) sur une zone de contact (2, 3) d'au moins un élément parmi la carte de circuits imprimés (1) et le support (4) ; et
la fixation de la carte de circuits imprimés (1) sur le support (4) à l'aide d'au moins un élément de fixation (11), dans lequel la première couche adhésive (9) est comprimée entre les zones de contact (2, 3) une fois la carte de circuits imprimés (1) fixée ;
le durcissement de la première couche adhésive (9) destinée à former un ensemble imageur stabilisé (12) ;
la fixation d'une lentille (6) sur l'ensemble imageur stabilisé (12) à l'aide d'une seconde couche adhésive (8), dans lequel l'étape de fixation de la lentille (6) comprend le positionnement de la lentille sur le support (4) pour aligner son plan focal avec l'imageur (10) et le durcissement de la seconde couche adhésive (8).

2. Procédé selon la revendication 1, dans lequel au moins une parmi les étapes de durcissement des première et seconde couches adhésives (9, 8) comprend le chauffage de l'adhésif.

3. Procédé selon la revendication 1 ou 2, dans lequel l'étape de durcissement de la première couche adhésive (9) comprend le durcissement jusqu'à la pleine résistance.

4. Procédé selon une quelconque revendication précédente, dans lequel l'étape de durcissement de la première couche adhésive (9) comprend le chauffage à une température égale ou supérieure à une température de fonctionnement maximale pour le dispositif optique.

5. Procédé selon une quelconque revendication précédente, dans lequel l'étape de durcissement de la première couche adhésive (9) comprend le chauffage pendant une durée jusqu'à durcissement complet de l'adhésif.

6. Procédé selon une quelconque revendication précédente, dans lequel la première couche adhésive durcie (9) stabilise l'interface entre les zones de contact (2, 3) dans l'ensemble imageur stabilisé (12).

7. Procédé selon une quelconque revendication précédente, dans lequel l'étape de fixation de la lentille (6) sur l'ensemble imageur stabilisé (12) comprend un alignement du système optique destiné à compenser les tolérances de fabrication.

8. Procédé selon une quelconque revendication précédente, dans lequel l'étape de fixation de la carte de circuits imprimés (1) au support (4) à l'aide d'au moins un élément de fixation (11) comprend la fixation à l'aide d'un élément de fixation à vis.

9. Procédé selon une quelconque revendication précédente, dans lequel l'étape de fixation de la lentille (6) sur l'ensemble imageur stabilisé (12) comprend l'alignement de la lentille (6) sur la base d'une position durcie de l'imageur (10) dans l'ensemble imageur stabilisé (12).

10. Dispositif optique, comprenant :
un ensemble imageur stabilisé (12) comprenant une carte de circuits imprimés (1) supportant un imageur (10), un support (4) destiné à supporter la carte de circuits imprimés (1) et au moins un élément de fixation (11) fixant la carte de circuits imprimés (1) au support (4), dans lequel la fixation est stabilisée par une première couche adhésive (9) d'adhésif durci comprimé entre des zones de contact (2, 3) de la carte de circuits imprimés (1) et le support (4) ; et
une lentille (6) fixée au support (4) par une seconde couche adhésive (8) d'adhésif durci dans une position de manière à ce que son plan focal soit aligné avec l'imageur (10) dans la position stabilisée par la première couche adhésive (9).

11. Dispositif optique selon la revendication 10, dans lequel l'adhésif est durci à la chaleur.

12. Dispositif optique selon la revendication 10, dans lequel la première couche adhésive (9) est durcie à pleine résistance et le plan focal est aligné avec l'imageur (10) dans la position stabilisée par la première couche adhésive durcie à pleine résistance (9).

13. Dispositif optique selon l'une quelconque des revendications 10 à 12, dans lequel la première couche adhésive (9) est durcie jusqu'à un durcissement complet et le plan focal est aligné avec l'imageur (10) dans la position stabilisée par la première couche adhésive (9) complètement durcie.

14. Dispositif optique selon l'une quelconque des revendications 10 à 13, dans lequel la première couche adhésive durcie (9) stabilise l'interface entre les zones de contact (2, 3) dans l'ensemble imageur stabilisé (12).

15. Dispositif optique selon l'une quelconque des revendications 10 à 14, dans lequel la lentille (6) est fixée au support (4) destiné à compenser les tolérances de fabrication dans l'alignement du système optique.

16. Dispositif optique selon l'une quelconque des revendications 10 à 15, dans lequel ledit au moins un élément de fixation (11) comprend un élément de fixation à vis.
